# EUROPEAN PATENT SPECIFICATION

(11) **EP 3 154 299 B1**
(45) Date of publication and mention of the grant of the patent: **18.12.2019**
(21) Application number: 16183657.2
(22) Date of filing: 07.06.2010
(51) Int. Cl.: H04W 72/04, H04W 48/12, H04L 5/00, H04W 52/02, H04W 76/00, H04W 72/12

(54) **METHOD AND APPARATUSFOR OBTAINING UPLINK RESOURCES**
VERFAHREN UND VORRICHTUNG ZUR GEWINNUNG VON UPLINK-RESSOURCEN
PROCÉDÉ ET APPAREIL PERMETTANT D'OBTENIR DES RESSOURCES DE LIAISON MONTANTE

(30) Priority: 30.06.2009 CN 200910158458
(43) Date of publication of application: 12.04.2017
(62) Divisional of application: 10793546.2
(73) Proprietor: Huawei Technologies Co., Ltd., Longgang District Shenzhen, Guangdong 518129 (CN)
(72) Inventor: GAO, Wen, Shenzhen, Guangdong 518129 (CN); ZENG, Qinghai, Shenzhen, Guangdong 518129 (CN)
(74) Representative: Pfenning, Meinig & Partner mbB

(56) References cited:
- WO-A1-2009/022790
- US-A1- 2008 186 892
- CMCC: "Resource Allocation and PDCCH Design Issues in Carrier Aggregation", 3GPP DRAFT; R1-090924, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090206, 6 February 2009 (2009-02-06), XP050318765,
- ITRI: "Discussion of DRX in Carrier Aggregation", 3GPP DRAFT; R2-093915_DISCUSSION OF DRX IN CARRIER AGGREGATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090624, 24 June 2009 (2009-06-24), XP050352108,
- NOKIA ET AL: "L1 control signaling with carrier aggregation in LTE-Advanced", 3GPP DRAFT; R1-083730, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20080924, 24 September 2008 (2008-09-24), XP050317069,

## Description

### FIELD OF THE INVENTION

The present invention relates to Long Term Evolution technologies, and in particular, to a method for obtaining uplink resources, a method for scheduling uplink resources, an apparatus, and a system.

### BACKGROUND OF THE INVENTION

The maximum bandwidth in a Long Term Evolution (Long Term Evolution LTE) system is 20 Mbps. If a discontinuous reception (Discontinuous Reception, DRX) mode is configured on a connected user equipment (User Equipment, UE), the UE needs to keep in an active (Active) state after sending a scheduling request (schedule request, SR), so as to monitor a physical downlink control channel (Physical Downlink Control Channel, PDCCH) until obtaining valid uplink scheduling resources, an uplink grant (UL Grant).

An advanced Long Term Evolution (Advanced LTE, LTE-A) system is an extension and enhancement of the LTE system. To extend the maximum bandwidth to 100 Mbps, a carrier aggregation (Carrier Aggregation, CA) technology is being developed for the LTE-A system. The CA technology aggregates carriers in different bands into the maximum 100 Mbps bandwidth so that a UE of the LTE-A capable of sending or receiving signals at more than 20 Mbps can receive or send data on multiple component carriers (Component Carrier, CC) simultaneously.

The bandwidth of each CC in the LTE-A system is not greater than 20 Mbps, and each CC has an independent PDCCH and an independent physical uplink control channel (Physical Uplink Control Channel, PUCCH). If the UE configures the DRX mode on multiple CCs, after the UE that needs to send uplink data sends a resource schedule request, SR, to an evolved base station (Evolved Node B, eNB), the UE keeps in the active (Active) state on all CCs configured with the DRX mode to monitor PDCCH scheduling according to the processing mode in the LTE system, which consumes power of the UE massively.

Document "CMCC: "Resource Allocation and PDCCH Design Issues in Carrier Aggregation", 3GPP DRAFT; R1-090924, 6 February 2009 " discloses resource allocation and PDCCH design issues in carrier aggregation. Carrier aggregation is widely discussed as a potential technology to support wider bandwidth (up to 100MHz) in LTE-Advanced. In the previous RAN WG1 #55b meetings, many options for the downlink control signalling have been introduced and studied, which are listed as follows. In option 3, all the PDCCHs of a UE are transmitted on one component carrier. However, the associated component carrier with each PDCCH needs to be indicated. It is recited to monitor and CQT report on as few component carriers as possible per UE; and save the PDCCH overhead under most PDCCH design options by restricting the resource allocation indication to as few component carriers as possible. This is important if the number of UEs is large, especially when larger than that usually supported by the LTE system. For example, consider there are 30 UEs in the system with two component carriers. By resource allocation (RA) strategy 1, each UE is scheduled to only one component carrier.

Document "ITRI: "Discussion of DRX in Carrier Aggregation", 3GPP DRAFT; R2-093915_DISCUSSION OF DRX IN CARRIER AGGREGATION; 24 June 2009" discloses discussion of DRX in carrier aggregation. The presented contribution discusses three candidates of DRX operation in carrier aggregation proposed in the RAN2#66 meeting: 1) identical DRX operation, 2) independent DRX operation and 3) anchor carrier based DRX operation. It was suggested that only one of the configured CCs performs the DRX operation and the others stay in sleeping duration. Upon the huge data arrival, the eNB may use a dedicated control signaling to notify the UE activating other CCs. Similar to the identical DRX operation, only one DRX configuration is required, and the corresponding configuration messages in the current Rel-8 specification are not required to be changed. On the other hand, since the activated CCs may be dynamically controlled, it is fast to configure extra bandwidth upon huge amount of data arrival. In addition, because the UE only monitors the PDCCH on the anchor CC, this operation can greatly save UE's energy from listening on other CCs. Only when the high bandwidth scenario is configured, the UE requires monitoring the PDCCH on other.

### SUMMARY OF THE INVENTION

Embodiments of the present invention provide a method for obtaining uplink resources, a method for scheduling uplink resources, an apparatus, and a system.

An embodiment of the present invention provides a method for obtaining uplink resources, where the method includes: sending a scheduling request to a base station through a dedicated scheduling request resource; and monitoring a physical downlink control channel on set component carriers and receiving uplink scheduling resources, where the set component carriers include more than one component carriers preconfigured by the base station through signaling, where the signaling includes radio resource control, RRC, signaling or media access control, MAC, signaling.

An embodiment of the present invention provides a method for scheduling uplink resources, where the method includes: receiving a scheduling request from a user equipment through a dedicated scheduling request resource; and scheduling uplink scheduling resources for the user equipment on set component carriers, where the set component carriers include more than one component carriers preconfigured by the base station through signaling, where the signaling includes radio resource control, RRC, signaling or media access control, MAC, signaling.

An embodiment of the present invention also provides a device, including: a sending unit and a receiving unit, where the sending unit is configured to send a scheduling request to a base station through a dedicated scheduling request resource; and the receiving unit is configured to: monitor a physical downlink control channel on set component carriers and receive uplink scheduling resources, where the set component carriers include more than one component carriers preconfigured by the base station through signaling, where the signaling includes radio resource control, RRC, signaling or media access control, MAC, signaling.

An embodiment of the present invention also provides a base station, including: a receiving unit and a scheduling unit, where the receiving unit is configured to receive a scheduling request from a user equipment through a dedicated scheduling request resource; and the scheduling unit is configured to schedule uplink scheduling resources for the user equipment on set component carriers, CCs, where the set CCs include more than one component carriers preconfigured by the base station through signaling, where the signaling includes radio resource control, RRC, signaling or media access control, MAC, signaling.

An embodiment of the present invention also provides another communication system, including the foregoing base station and the foregoing device.

In the embodiments of the present invention, the uplink resources are scheduled on the set component carriers, and therefore, the UE does not consume too much power when monitoring the PDCCH scheduling, and the power waste is avoided.

### BRIEF DESCRIPTION OF THE DRAWINGS

To illustrate the technical solutions in the embodiments of the present invention or in the prior art more clearly, the following outlines the accompanying drawings for describing the embodiments of the present invention. Apparently, the accompanying drawings in the following description are illustrative and not exhaustive, and persons of ordinary skill in the art can derive other drawings from the accompanying drawings without creative efforts.
FIG. 1 is a flowchart of a method according to a first embodiment of the present invention;
FIG. 2 is a flowchart of a method according to a second embodiment of the present invention;
FIG 3 is a flowchart of a method according to a third embodiment of the present invention;
FIG. 4 is a block diagram of a user equipment according to a fourth embodiment of the present invention;
FIG. 5 is a block diagram of a base station according to a fifth embodiment of the present invention; and
FIG. 6 is a schematic diagram of a communication system according to another embodiment of the present invention.

### DETAILED DESCRIPTION OF THE EMBODIMENTS

The following detailed description is given with reference to the accompanying drawings to provide a clear and thorough understanding of the present invention. Evidently, the described embodiments are some but not all of the embodiments of the present invention.. All other embodiments, which can be derived by those of ordinary skill in the art from the embodiments given here without creative efforts, shall fall within the scope of the present invention.

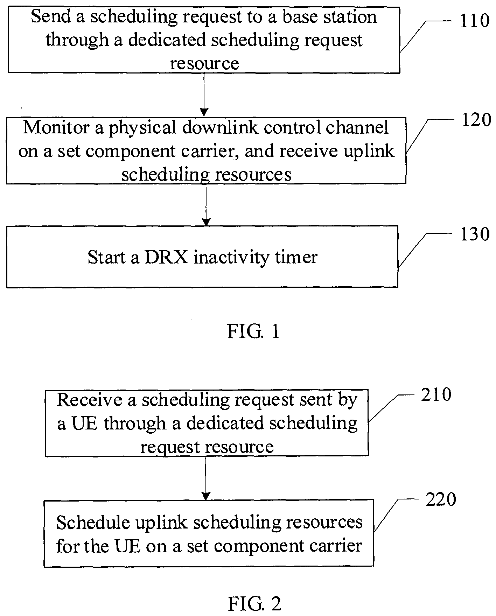

A first embodiment of the present invention provides a method for obtaining uplink resources. As shown in FIG. 1, the method includes the following steps:
Step 110: A UE sends a scheduling request, SR, to an eNB through a dedicated scheduling request resource.

Multiple component carriers exist in an LTE-A system, and each component carrier has an independent PUCCH. Therefore, a dedicated SR resource can be configured for the UE on each component carrier. Generally, a dedicated SR resource may be configured on only one component carrier for the UE of the LTE -A. When the UE needs to send uplink data, the UE triggers a conventional buffer status report (Buffer Status Report, BSR). If no uplink scheduling resource is available now, the UE may send a scheduling request, SR, to the eNB through the configured dedicated scheduling request (Scheduling Request, SR) resource.

Step 120: The UE monitors physical downlink control channel on a set component carrier, and receives uplink scheduling resources, for example, a UL Grant.

The set component carrier includes but is not limited to one or more of the following component carriers: a component carrier for sending the scheduling request, SR, an anchor (Anchor) component carrier, a component carrier not configured with DRX, and one or more component carriers preconfigured by the UE or eNB through signaling, where the signaling includes RRC signaling, MAC signaling, and so on.

In this embodiment, the uplink scheduling resources arc received on the set component carrier, thus solving the power waste problem caused when the UE receives the uplink scheduling resources on multiple component carriers in the prior art.

Step 130: After receiving the uplink scheduling resources on the set component carrier, the UE starts a DRX inactivity timer (DRX Inactivity Timer) for a component carrier configured with the DRX or for part of component carriers, where the part of the component carriers refers to all or part of component carriers in a component carrier group.

This step is optional. Specifically, within the time counted by the DRX inactivity timer, the UE receives uplink scheduling resources allocated subsequently through the component carrier for which the DRX inactivity timer is started.

According to a DRX operation mode in an existing LTE system, when the UE receives PDCCH signaling, such as uplink scheduling resources from the eNB, the UE needs to start an inactivity timer to let the UE be active and receive the subsequent uplink scheduling resources.

In this embodiment of the present invention, when multiple component carriers exist, the UE receives PDCCH signaling on a set component carrier. The PDCCH signaling carries uplink scheduling resources, and the uplink scheduling resources are primarily used by the UE for sending a BSR to the eNB, The UE may start a corresponding DRX inactivity timer for all component carriers configured with DRX. The UE keeps active within the time counted by the DRX inactivity timer, and can receive a subsequent new schedule through all component carriers configured with DRX: or, instead of starting a DRX inactivity timer for all component carriers configured with DRX, the UE starts a corresponding DRX inactivity timer for only part of the component carriers, where the part of the component carriers refers to one or more component carriers in a component carrier group.

It should be noted that in this embodiment, the component carrier group can be sorted according to a logical channel group, and all component carriers in a component carrier group correspond to a same logical channel; or, the component carrier group can be sorted according to services born on component carriers, and all component carriers in a component carrier group bear a same service. In this way, the eNB can schedule different services on different component carrier groups. By starting a DRX inactivity timer corresponding to a component carrier group, the UE can monitor whether there is any scheduling subsequently related to the service born on the component carrier group, thus receiving the schedule in time without leading to a power waste. The preceding description about the component carrier group is applicable to other embodiments of the present invention, which is not repeatedly described in the following.

In this embodiment, the UE may start a corresponding DRX inactivity timer for a preconfigured component carrier only, and monitor whether there is any new uplink scheduling resource allocated subsequently in the running period of the DRX inactivity timer, thus further reducing power consumption of the UE.

A second embodiment of the present invention provides a method for scheduling uplink resources. As shown in FIG. 2, the method includes the following steps:
Step 210: An eNB receives a scheduling request, SR, sent by a UE through a dedicated scheduling request resource.

Step 220: The eNB schedules uplink scheduling resources for the UE on a set component carrier.

The set component carrier includes but is not limited to any one or combination of the following: a component carrier for receiving the scheduling request, SR, an anchor component carrier, a component carrier not configured with DRX, or a component carrier preconfigured by the UE or eNB.

Specifically, the eNB may schedule the uplink scheduling resources for the UE on the component carrier for receiving the scheduling request, SR, an anchor component carrier, a component carrier not configured with DRX, or a preconfigured component carrier, In this way, the UE can receive the uplink scheduling resources on the set component carrier.

In this embodiment, the eNB sends the uplink scheduling resources on the set component carrier. Therefore, the UE can monitor the set component carrier only, thus solving the power waste problem caused when the UE receives the uplink scheduling resources on multiple component carriers in the prior art.

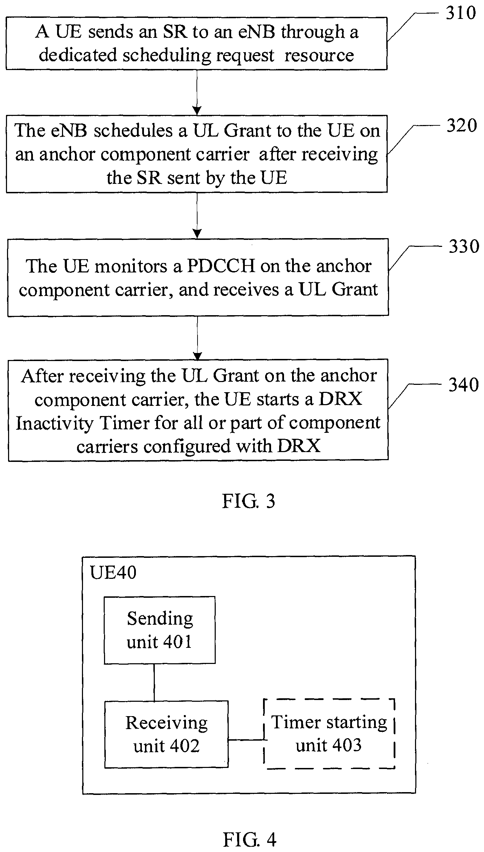

A third embodiment of the present invention describes the process of scheduling and obtaining the uplink scheduling resources, supposing that an anchor component carrier is the set component carrier. The anchor component carrier here refers to an anchor carrier in multiple component carriers. As shown in FIG. 3, the method includes the following steps:
Step 310: A UE sends a scheduling request, SR, to an eNB through a dedicated scheduling request resource.

Step 320: After receiving the scheduling request, SR, sent by the UE, the eNB schedules a UL Grant to the UE on the anchor component carrier. The UL Grant is used for the UE to send a buffer status report, BSR, to the eNB.

Step 330: The UE monitors a PDCCH on the anchor component carrier, and receives the UL Grant.

In this case, the UE is in an active state only on the anchor component carrier, and monitors the PDCCH to receive the UL Grant.

Step 340: After receiving the UL Grant on the anchor component carrier, the UE starts a DRX inactivity timer for all component carriers configured with DRX so as to receive a subsequent possible UL Grant.

For more details, see the description in the preceding first embodiment, which is not repeatedly described here.

In other embodiments of the present invention, the anchor component carrier may be other set component carrier. According to a protocol, default setting, or presetting of signaling, the eNB and the UE may determine the component carrier or component carriers on which the UL Grant will be sent and received. For example, if the set component carrier is a component carrier for sending the scheduling request, SR, the eNB sends the UL Grant on the component carrier for receiving the SR. Accordingly, the UE monitors the PDCCH on this component carrier and receives the UL Grant. If the default setting indicates that the UL Grant is sent and received on the component carrier not configured with DRX, the UE receives the UL Grant on this component carrier. In another example, the eNB and the UE may preset a component carrier or certain component carriers which can send and receive the UL Grant, the eNB sends the UL Grant on the preset component carrier, and the UE receives the UL Grant on this component carrier.

In this embodiment, the uplink scheduling resources are sent and received on the set component carrier, thus solving the power waste problem caused when the UE receives the uplink scheduling resources on multiple component carriers in the prior art. Moreover, the UE may start a corresponding DRX inactivity timer for a preconfigured component carrier only, and monitor whether there is any new uplink scheduling resources allocated subsequently in a running period of the DRX inactivity timer, thus further reducing power consumption of the UE.

A fourth embodiment of the present invention provides a user equipment, UE, 40 to implement the method for obtaining uplink resource, where the method is provided in the foregoing embodiments. As shown in FIG. 4, the UE 40 includes:
a sending unit 401, configured to send a scheduling request, SR, to an eNB through a dedicated scheduling request resource; and
a receiving unit 402, configured to monitor a PDCCH on a set component carrier after the sending unit sends the scheduling request, and receive uplink scheduling resources. Specifically, the receiving unit 402 may monitor the PDCCH and receive a UL Grant on a component carrier for sending the scheduling request, SR, or an anchor component carrier, or a component carrier not configured with DRX, or a preconfigured component carrier, according to the presetting. The preconfigured component carrier may be a component carrier preconfigured by the UE or eNB.

The UE may further include a timer starting unit 403, which is configured to start a DRX inactivity timer for a component carrier configured with DRX or for part of component carriers after the receiving unit 402 receives the uplink scheduling resources. The part of the component carriers here may be all or part of component carriers in a component carrier group, The component carrier group may be a group of component carriers sorted according to a logical channel group and/or a born service. For example, all component carriers in a component carrier group correspond to a same logical channel, and/or bear a same service.

The foregoing modules implement the method for obtaining uplink resource, where the method is provided in the foregoing embodiments, and solve the power waste problem caused when the UE receives the uplink scheduling resources on multiple component carriers in the prior art.

Another embodiment of the present invention also provides a communication system. The system includes a user equipment, UE, and a base station which communicates with the UE. The UE may be the user equipment 40 provided in the foregoing embodiment.

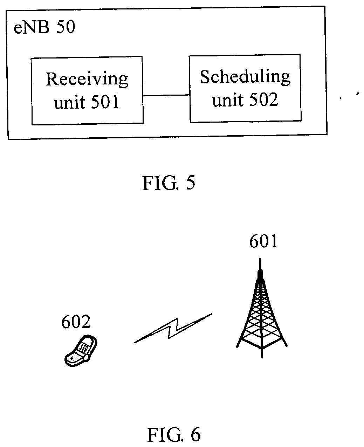

A fifth embodiment of the present invention provides a base station, eNB, 50 to implement the method for scheduling uplink resource, where the method is provided in the foregoing embodiments. As shown in FIG. 5, the eNB 50 includes:
a receiving unit 501, configured to receive a scheduling request, SR, sent by a UE through a dedicated scheduling request resource; and
a scheduling unit 502, configured to schedule uplink scheduling resources for the UE on a set component carrier, where the set component carrier, for example, includes any one or combination of the following items: a component carrier for receiving the scheduling request, SR, an anchor component carrier, a component carrier not configured with DRX, or a preconfigured component carrier.

In this embodiment, the scheduling unit schedules the uplink resources on the set component carrier, so that the UE reduces power consumption and avoids the power waste.

The foregoing modules implement the method for scheduling uplink resource, where the method is provided in the foregoing embodiments. For more details, see the description in such embodiments, which will not be repeated here.

Another embodiment of the present invention also provides a communication system. The system includes a base station, eNB, 601 and at least one UE 602 which communicates with the eNB 601. The eNB 601 may be the base station, eNB, 50 provided in the foregoing embodiments. FIG. 6 shows an example of the communication system.

In the final analysis, in the embodiments of the present invention, if multiple component carriers are configured with DRX, the UE receives uplink resources on only the set component carrier after sending a scheduling request, thus effectively avoiding waste of power caused when the UE receives the uplink scheduling resources on multiple component carriers in the prior art. Moreover, the UE starts a corresponding DRX inactivity timer only for a preconfigured component carrier, thus further reducing power consumption of the UE.

Persons of ordinary skill in the art understand that all or part of the steps of the described embodiments may be implemented by a program instructing relevant hardware. The program may be stored in a computer readable storage medium such as a ROM/RAM, a magnetic disk or a compact disk.

The preceding embodiments give further detail description of the objectives, technical solutions and merits of the present invention. It should be understood, the foregoing descriptions are merely specific embodiments of the present invention, but are not intended to limit the protection scope of the present invention. Any modification, equivalent replacement, or variation to the invention without departing from the scope of the invention shall fall within the protection scope of the present invention.

## Claims

1. A method for obtaining uplink resources, comprising:
sending (110), by a user equipment, UE, a scheduling request, SR, to a base station through a dedicated SR resource;
monitoring (120), by the UE, a physical downlink control channel, PDCCH, on at least one set component carrier, CC, and receiving uplink scheduling resources; and
after receiving the uplink scheduling resources, starting (130) a discontinuous reception, DRX, inactivity timer for all or part of CCs in a CC group, wherein:
the at least one set CC comprises one or combination of the following items: a CC for sending the SR, or an anchor CC, or a CC not configured with Discontinuous Reception, DRX, or one or more preconfigured CCs.

2. The method according to claim 1, wherein when the at least one set CC comprises the one or more preconfigured CCs, the one or more preconfigured CC are preconfigured by the base station through signaling, and the signaling comprises radio resource control, RRC, signaling or media access control, MAC, signaling.

3. The method according to claim 1, wherein:
all CCs in the CC group correspond to a same logical channel, and/or bear a same service.

4. A user equipment, UE, comprising:
means (401) for sending a scheduling request, SR, to a base station through a dedicated SR resource;
means (402) for monitoring a physical downlink control channel, PDCCH, on at least one set component carrier, CC, and receiving uplink scheduling resources; and
means (403) for, after receiving the uplink scheduling resources,
starting a discontinuous reception, DRX, inactivity timer for all or part of CCs in a CC group, wherein:
the at least one set CC comprises one or combination of the following items: a CC for sending the SR, or an anchor CC, or a CC not configured with Discontinuous Reception, DRX, or one or more preconfigured CCs.

5. The UE according to claim 4, wherein when the at least one set CC comprises the one or more preconfigured CC, the one or more preconfigured CC are preconfigured by the base station through signaling, and the signaling comprises radio resource control, RRC, signaling or media access control, MAC, signaling.

6. The UE according to claim 4, wherein:
all CCs in the CC group correspond to a same logical channel, and/or bear a same service.

7. A device, configured to perform the method according to any one of claims 1 to 3.

8. A program product, comprising a program for when executed on a computer, performing the method according to any one of claims 1 to 3.

## Patentansprüche

1. Verfahren zur Gewinnung von Uplink-Ressourcen, umfassend:
Senden (110), durch eine Benutzerausrüstung, UE, einer "Scheduling"-Anforderung, SR, an eine Basisstation durch eine dedizierte SR Ressource;
Überwachen (120), durch die UE, eines physikalischen Downlink-Steuerkanals, PDCCH, auf mindestens einem eingestellten Komponententräger, CC, und Empfangen von Uplink-"Scheduling"-Ressourcen; und
nach dem Empfangen der Uplitik-"Scheduling"-Ressourcen, Starten (130) eines diskontinuierlichen Empfangs-, DRX, Inaktivitätszeitgebers für alle oder einen Teil der CCs in einer CC Gruppe, wobei:
der mindestens eine eingestellte CC ein oder eine Kombination der folgenden Elemente umfasst; einen CC zum Senden der SR, oder einen Anker CC, oder einen CC, der nicht mit einem diskontinuierlichen Empfang, DRX, ausgelegt ist, oder einen oder mehrere voraus gelegte CCs.

2. Verfahren nach Anspruch 1, wobei, wenn der mindestens eine eingestellte CC den einen oder die mehreren vorausgelegten CCs umfasst, der eine oder die mehreren vorausgelegten CCs von der Basisstation durch eine Signalisierung vorausgelegt werden, und die Signalisierung eine Funkressourcensteuerungs-, RRC, Signalisierung oder Medienzugriffssteuerungs-, MAC, Signalisierung umfasst.

3. Verfahren nach Anspruch 1, wobei:
alle CCs in der CC Gruppe demselben logischen Kanal entsprechen und/oder denselben Dienst tragen.

4. Benutzerausrüstung, UE, umfassend:
Mittel (401) zu Senden einer "Scheduling"-Anforderung, SR, an eine Basisstation durch eine dedizierte SR Ressource;
Mittel (402) zum Überwachen eines physikalischen Downlink-Steuerkanals, PDCCH, auf mindestens einem eingestellten Komponententräger, CC, und Empfangen von Uplink-"Scheduling"-Ressourcen; und
Mittel (403) zum Starten, nach dem Empfangen der Uplink-"Scheduling"-Ressourcen, eines diskontinuierlichen Empfangs-, DRX, Inaktivitätszeitgebers für alle oder einen Teil der CCs in einer CC Gruppe, wobei:
der mindestens eine eingestellte CC ein oder eine Kombination der folgenden Elemente umfasst: einen CC zum Senden der SR, oder einen Anker CC, oder einen CC, der nicht mit einem diskontinuierlichen Empfang, DRX, ausgelegt ist, oder einen oder mehrere vorausgelegte CCs.

5. UE nach Anspruch 4, wobei, wenn der letzte eingestellte CC den einen oder die mehreren vorausgelegten CCs umfasst, der eine oder die mehreren vorausgelegten CCs von der Basisstation durch eine Signalisierung vorausgelegt werden, und die Signalisierung eine Funkressourcensteuerungs-, RRC, Signalisierung oder Medienzugriffssteuerungs-, MAC, Signalisierung umfasst.

6. UE nach Anspruch 4, wobei:
alle CCs in der CC Gruppe demselben logischen Kanal entsprechen und/oder denselben Dienst tragen.

7. Vorrichtung, welche ausgelegt ist, um das Verfahren nach einem der Ansprüche 1 bis 3 vorzunehmen.

8. Programmprodukt, umfassend ein Programm zum Vornehmen, wenn es auf einem Computer ausgeführt wird, des Verfahrens nach einem der Ansprüche 1 bis 3.

## Revendications

1. Procédé pour obtenir des ressources de liaison montante, consistant :
à envoyer (110), au moyen d'un équipement utilisateur (UE), une demande de planification (SR) à une station de base par le biais d'une ressource de demande SR dédiée ;
à surveiller (120), au moyen de l'équipement utilisateur, un canal de commande de liaison descendante physique (PDCCH) sur au moins une porteuse composante (CC) définie et à recevoir des ressources de planification de liaison montante ; et
après la réception des ressources de planification de liaison montante, à mettre en marche (130) un temporisateur d'inactivité de réception discontinue (DRX) pour la totalité ou une partie des porteuses composantes dans un groupe de porteuses composantes, dans lequel :
la ou les porteuses composantes définies comprennent l'un, ou une combinaison, des éléments suivants : une porteuse composante pour envoyer la demande SR ou une porteuse composante d'ancrage ou une porteuse composante non configurée avec une réception discontinue (DRX) ou une ou plusieurs porteuses composantes préconfigurées.

2. Procédé selon la revendication 1, dans lequel, lorsque la ou les porteuses composantes définies comprennent la ou les porteuses composantes préconfigurées, la ou les porteuses composantes préconfigurées sont préconfigurées par la station de base par le biais d'une signalisation et la signalisation comprend une signalisation de commande de ressources radio (RRC) ou une signalisation de contrôle d'accès au support (MAC).

3. Procédé selon la revendication 1, dans lequel :
toutes les porteuses composantes dans le groupe de porteuses composantes correspondent à un même canal logique et/ou supportent un même service.

4. Équipement utilisateur (UE) comprenant :
un moyen (401) pour envoyer une demande de planification (SR) à une station de base par le biais d'une ressource de demande SR dédiée ;
un moyen (402) pour surveiller un canal de commande de liaison descendante physique (PDCCH) sur au moins une porteuse composante (CC) définie et pour recevoir des ressources de planification de liaison montante ; et
un moyen (403) pour mettre en marche, après la réception des ressources de planification de liaison montante, un temporisateur d'inactivité de réception discontinue (DRX) pour la totalité ou une partie des porteuses composantes dans un groupe de porteuses composantes, dans lequel :
la ou les porteuses composantes définies comprennent l'un, ou une combinaison, des éléments suivants : une porteuse composante pour envoyer la demande SR ou une porteuse composante d'ancrage ou une porteuse composante non configurée avec une réception discontinue (DRX) ou une ou plusieurs porteuses composantes préconfigurées.

5. Équipement utilisateur selon la revendication 4, dans lequel, lorsque la ou les porteuses composantes définies comprennent la ou les porteuses composantes préconfigurées, la ou les porteuses composantes préconfigurées sont préconfigurées par la station de base par le biais d'une signalisation et la signalisation comprend une signalisation de commande de ressources radio (RRC) ou une signalisation de contrôle d'accès au support (MAC).

6. Équipement utilisateur selon la revendication 4, dans lequel :
toutes les porteuses composantes dans le groupe de porteuses composantes correspondent à un même canal logique et/ou supportent un même service.

7. Dispositif, configuré pour réaliser le procédé selon l'une quelconque des revendications 1 à 3.

8. Produit-programme comprenant un programme pour réaliser, lorsqu'il est exécuté sur un ordinateur, le procédé selon l'une quelconque des revendications 1 à 3,
